# EUROPÄISCHE PATENTSCHRIFT

(11) **EP 3 710 722 B1**
(45) Veröffentlichungstag und Bekanntmachung des Hinweises auf die Patenterteilung: **16.11.2022**
(21) Anmeldenummer: 18815657.4
(22) Anmeldetag: 06.12.2018
(51) Int. Cl.: F16F 9/32, F16F 9/02, G01L 19/00, G01L 19/06, G08C 17/02, H04Q 9/00

(54) **ÜBERWACHUNGSSENSOR MIT SICHERHEITSFUNKTION ZUM EVAKUIEREN DER GASDRUCKFEDER PER FUNK**
MONITORING SENSOR HAVING SAFETY FUNCTION FOR EVACUATING THE GAS PRESSURE SPRING WIRELESSLY
CAPTEUR DE SURVEILLANCE PRÉSENTANT UNE FONCTION DE SÉCURITÉ SERVANT À FAIRE LE VIDE DANS LE RESSORT À GAZ À DISTANCE

(30) Priorität: 26.04.2018 DE 102018110073
(43) Veröffentlichungstag der Anmeldung: 23.09.2020
(73) Patentinhaber: Fibro GmbH, 74855 Hassmersheim (DE)
(72) Erfinder: REINMUTH, Norbert, 74855 Hassmersheim (DE)
(74) Vertreter: Staeger & Sperling Partnerschaftsgesellschaft mbB
(86) Internationale Anmeldenummer: PCT/EP2018/083845
(87) Internationale Veröffentlichungsnummer: WO 2019/206442

(56) Entgegenhaltungen:
- EP-A2- 2 937 594
- CN-A- 105 299 470
- DE-A1-102014 104 481
- DE-U1-202007 019 504
- DE-U1-202007 019 504
- DE-U1-202013 102 485
- US-A1- 2012 136 537
- US-A1- 2012 136 537

## Beschreibung

Die vorliegende Erfindung betrifft einen Überwachungssensor zum Messen, zum Empfangen und zum Übermitteln einer physikalischen Größe einer Gasdruckfeder, die ein Sensorelement und eine Druckentlastungsöffnung umfasst. Die Druckentlastungsöffnung ist mittels Fernauslösung des Sensorelements von einem Betriebszustand in einen Sicherheitszustand zum Evakuieren der Gasdruckfeder schaltbar. Ferner ist der Überwachungssensor mit einer bestimmungsgemäß lösbaren Anschlussvorrichtung zum Anschließen an eine Kupplung der Gasdruckfeder ausgebildet ist.

Gattungsbildende Überwachungssensoren sind aus dem Stand der Technik bekannt.

Das Auftreten einer Crash-Situation im Werkzeug erfordert, dass die Gasdruckfeder evakuiert wird, bevor diese gefahrlos ausgebaut werden kann. Im Stand der Technik werden hierfür die Gasdruckfedern miteinander verbunden. Dies ist entweder mittels Schlauchleitungen oder Tieflochbohrungen in einer Verbund- bzw. Trägerplatte realisiert. Unter Zuhilfenahme einer Ablassvorrichtung kann über diese Komponenten das Gas von außen aus der Gasdruckfeder evakuiert werden.

Nachteilig an diesem Werkzeugaufbau ist, dass zum Evakuieren der Gasdruckfeder eine weitere Komponente, die Ablassvorrichtung, herangezogen werden muss. Außerdem bleibt ein Sicherheitsrisiko beim Evakuieren der Gasdruckfeder bestehen, da der Werkzeuganwender weiterhin in der Nähe der Gasdruckfeder arbeiten muss. Ferner ist dieser Werkzeugaufbau aufgrund der zusätzlichen Komponenten wie Schlauchleitungen oder der Verbund- bzw. Trägerplatte sehr komplex.

Weitere Vorrichtungen zur Drucküberwachung sind beispielsweise aus den Schriften US 2012 / 136 537 A1, EP 2 937 594 A2 und CN 105 299 470 A bekannt.

Es ist daher Aufgabe der vorliegenden Erfindung vorbesagte Nachteile zu überwinden und eine Ablassvorrichtung für eine Gasdruckfeder bereitzustellen, die die Evakuierung erleichtert, dabei das Sicherheits- bzw. Unfallrisiko reduziert und ferner die Komplexität des Werkzeugaufbaus reduziert.

Diese Aufgaben werden mit einer Merkmalskombination gemäß Patentanspruch 1 gelöst.

Erfindungsgemäß wird daher ein Überwachungssensor zum Messen, zum Empfangen und zum Übermitteln einer physikalischen Größe einer Gasdruckfeder vorgeschlagen, der ein Sensorelement und eine Druckentlastungsöffnung umfasst. Die Druckentlastungsöffnung ist erfindungsgemäß mittels Fernauslösung des Sensorelements von einem Betriebszustand in einen Sicherheitszustand zum Evakuieren der Gasdruckfeder schaltbar. Ferner ist der Überwachungssensor mit einer bestimmungsgemäß lösbaren Anschlussvorrichtung zum Anschließen an eine Kupplung der Gasdruckfeder ausgebildet. Dabei ist günstig, dass die Fernauslösung des Sensorelements zum Evakuieren der Gasdruckfeder einen ausreichend großen Sicherheitsabstand zu der Gasdruckfeder erlaub, sodass das Unfallrisiko minimiert ist. Außerdem kann ein erfindungsgemäßer Überwachungssensor aufgrund der Anschlussvorrichtung jeder Zeit montiert bzw. abgenommen werden. Dadurch vereinfacht sich die Wartung der Ablassvorrichtung erheblich. Ferner entfallen Komponenten wie Schlauchleitungen oder der Verbund- bzw. Trägerplatte. Dies hat zur Folge, dass die Komplexität des Werkzeugs deutlich abnimmt.

In einer vorteilhaften Ausführungsvariante ist vorgesehen, dass das Sensorelement zur Überwachung eines Drucks in der Gasdruckfeder ausgebildet ist. Dadurch kann der Überwachungssensor kontinuierlich den Druck innerhalb der Gasdruckfeder messen und die Messdaten weiterleiten.

Vorzugsweise ist der Überwachungssensor so ausgebildet, dass das Sensorelement neben den Daten für den Druck optional eine oder alle der weiteren Größen bestimmt: die Temperatur, die Teilenummer, die Teile-ID, die Sensor-ID, die Position im Werkzeug, die verschiedenen Zykluszeiten, den Batteriestatus und die Sendeleistung des Sensors und diese drahtlos an ein Gateway oder einen Datenhalter übermittelt. Dabei ist günstig, dass sämtliche für die Betriebssicherheit der Gasdruckfeder relevanten Betriebsdaten ermittelt werden. Ferner ermöglichen die weiteren Daten die Betriebsdaten einem bestimmten Überwachungssensor zuzuordnen, im Notfall die entsprechende Gasdruckfeder schnell zu lokalisieren. Außerdem vereinfacht sich mittels dieser Daten die Wartung erheblich.

In einem Ausführungsbeispiel der Erfindung ist günstigerweise vorgesehen, dass der Überwachungssensor beim Empfangen eines bestimmten Signals oder Drucks die Druckentlastungsöffnung von dem Betriebszustand in den Sicherheitszustand schaltet. Der Vorteil dieses Merkmals ist, dass der Überwachungssensor das Schalten der Druckentlastungsöffnung in den Sicherheits- bzw. in den Betriebszustand übernimmt und somit der Anwender sich nicht in unmittelbarer Nähe der Gasdruckfeder befinden muss. Das Unfallrisiko minimiert sich dadurch erheblich. Außerdem entfällt das Heranziehen einer weiteren Komponente zum Evakuieren der Gasdruckfeder.

Ferner ist eine Ausführung günstig, bei der das Verstellen der Druckentlastungsöffnung durch das Sensorelement mittels einer elektromagnetischen Spule, einem Mikro-Servomotor oder einer elektromechanischen Verstelleinheit ausgelöst wird. Dabei ist günstig, dass diese Komponenten in geeigneter Größe herstellbar sind und genügend Kraft zum Schalten der Druckentlastungsöffnung aufbringen können, dabei aber wenig Energie verbrauchen und sich die Energiebereitstellung einfach realisieren lässt.

In einem günstigen Anwendungsbeispiel von erfindungsgemäßen Überwachungssensoren umfasst der Sensor eine Batterie oder einen mechanisch aufladbaren Energiespeicher, die die Energie zum Verstellen der Druckentlastungsöffnung bereitstellen. Bei herkömmlichem Werkzeugeinsatz beträgt die Batterielebensdauer mehrere Jahre und kann bei routinemäßigen Wartungsarbeiten einfach ausgetauscht werden.

Der erfindungsgemäße Überwachungssensor ist in einer Ausführungsvariante ausgebildet, dass die Druckentlastungsöffnung als ein Ventil, insbesondere als ein 2/2-Wege Sicherheitsventil, ausgebildet ist. Das 2/2-Wege Sicherheitsventil stellt genau zwei Schaltstellungen, eine für den Betriebszustand und eine den Sicherheitszustand, bereit und ist deshalb besonders für den erfindungsgemäßen Überwachungssensor geeignet.

Weiter vorteilhaft ist es, wenn das Signal zum Fernauslösen des Sensorelements mittels Funk oder Bluetooth übertragen wird.

Das Sensorelement weist vorzugsweise ein Gehäuse aus Kunststoff und eine Grundplatte aus Aluminium auf und der mechanische Aufbau des Sensorelements ist entsprechend den Betriebsbedingungen schock- und vibrationsresistent ausgebildet.

In einer erfindungsgemäßen Weiterbildung des vorliegenden Überwachungssensors ist ferner vorgesehen, dass das Sensorelement einen Betriebstemperaturbereich von 0 °C bis 80 °C aufweist.

Erfindungsgemäß ist weiter mit Vorteil gesehen, dass das Sensorelement einen Temperatur-Messbereich von 0 °C bis 85 °C und einen Druck-Messbereich von 0 bar bis 500 bar aufweist.

In einer bevorzugten Ausführungsform der Erfindung wird demnach das Ventil in den Verbindungsabschnitt zwischen der Anschlussvorrichtung und dem Sensorelement integriert.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Seitenansicht einer Gasdruckfeder mit einem Überwachungssensor und
- Fig. 2: eine Prinzipskizze einer Gasdruckfeder mit einem Überwachungssensor.

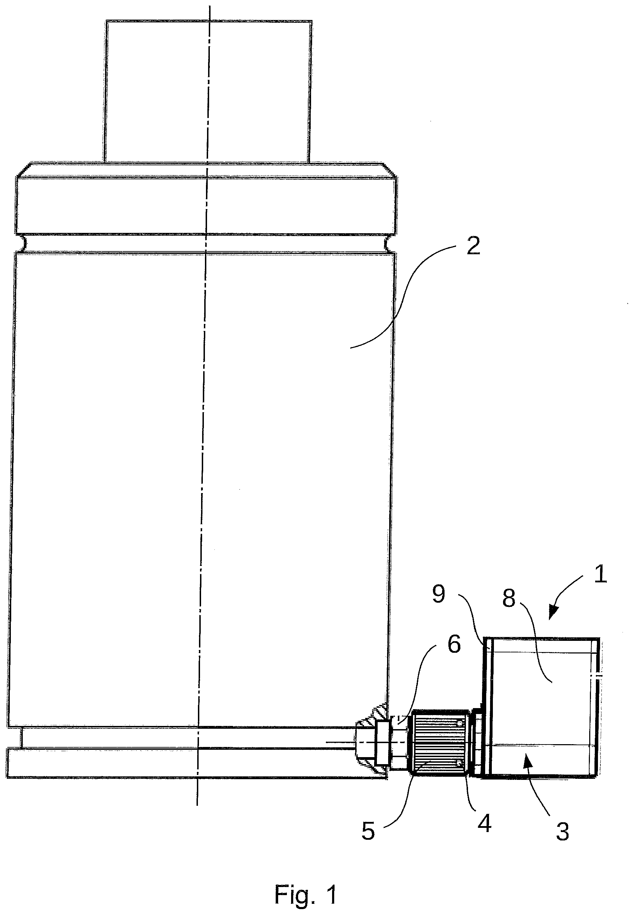

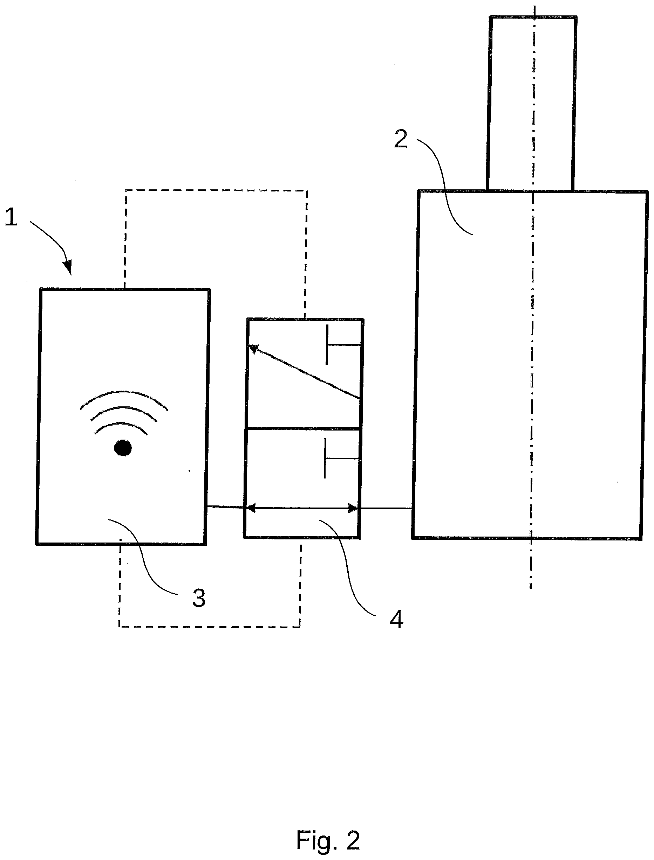

Die Erfindung wird im Folgenden mit Bezug auf die Figuren 1 und 2 anhand eines exemplarischen Ausführungsbeispiels beschrieben, wobei gleiche Bezugszeichen auf gleiche strukturelle und/oder funktionale Merkmale hinweisen.

In Figur 1 ist eine Seitenansicht des Überwachungssensors 1 zum Messen, zum Empfangen und zum Übermitteln einer physikalischen Größe einer Gasdruckfeder 2 gezeigt. Der Überwachungssensor 1 umfasst ein Sensorelement 3 und eine Druckentlastungsöffnung 4. Dabei ist die Druckentlastungsöffnung 4 mittels Fernauslösung des Sensorelements 3 von einem Betriebszustand in einen Sicherheitszustand zum Evakuieren der Gasdruckfeder 2 schaltbar. Des Weiteren ist der Überwachungssensor 1 mit einer bestimmungsgemäß lösbaren Anschlussvorrichtung 5 zum Anschließen an eine Kupplung 6 der Gasdruckfeder 2 ausgebildet.

Das Sensorelement 3 ist zur Überwachung eines Drucks in der Gasdruckfeder 2 ausgebildet und bestimmt neben den Daten für den Druck optional eine oder alle der weiteren Größen: die Temperatur, die Teilenummer, die Teile-ID, die Sensor-ID, die Position im Werkzeug, die verschiedenen Zykluszeiten, den Batteriestatus und die Sendeleistung des Sensors. Das Sensorelement 3 übermittelt diese drahtlos an ein Gateway oder einen Datenhalter.

Entsprechend den Betriebsbedingungen des Überwachungssensors 1 ist der mechanische Aufbau des Sensorelements 3 schock- und vibrationsresistent ausgebildet und das Sensorelement 3 weist ein Gehäuse 8 aus Kunststoff und eine Grundplatte 9 aus Aluminium auf.

Ferner ist das Ventil 4 des Überwachungssensor 1 in den Verbindungsabschnitt zwischen der Anschlussvorrichtung 5 und dem Sensorelement 3 integriert.

In Figur 2 ist eine Prinzipskizze einer Gasdruckfeder 2 mit einem Überwachungssensor 1 dargestellt. Dabei umfasst der Überwachungssensor 1 das Sensorelement 3 und das Ventil 4. Beim Empfangen eines bestimmten Signals oder Drucks schaltet der Überwachungssensor 1 das Ventil 4 von dem Betriebszustand in den Sicherheitszustand. Das Verstellen des Ventils 4 durch das Sensorelement 3 wird mittels einer elektromagnetischen Spule, einem Mikro-Servomotor oder einer elektromechanischen Verstelleinheit ausgelöst.

Ferner zeigt Figur 2, dass das Ventil 4 als ein 2/2-Wege Sicherheitsventil ausgebildet ist.

Das Signal zum Fernauslösen des Sensorelements 3 wird mittels Funk oder Bluetooth übertragen und nach Empfang des Signals wird die Gasdruckfeder 2 evakuiert.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Überwachungssensor (1) zum Messen, zum Empfangen und zum Übermitteln einer physikalischen Größe einer Gasdruckfeder (2) umfassend ein Sensorelement (3) und eine Druckentlastungsöffnung (4), **dadurch gekennzeichnet, dass** die Druckentlastungsöffnung (4) mittels Fernauslösung des Sensorelements (3) von einem Betriebszustand in einen Sicherheitszustand zum Evakuieren der Gasdruckfeder (2) schaltbar ist, wobei der Überwachungssensor (1) mit einer bestimmungsgemäß lösbaren Anschlussvorrichtung (5) zum Anschließen an eine Kupplung (6) der Gasdruckfeder (2) ausgebildet ist.

2. Überwachungssensor (1) gemäß Anspruch 1, **dadurch gekennzeichnet, dass** das Sensorelement (3) zur Überwachung eines Drucks in der Gasdruckfeder (2) ausgebildet ist.

3. Überwachungssensor (1) gemäß Anspruch 1 oder 2, **dadurch gekennzeichnet, dass** das Sensorelement (3) dazu ausgebildet ist neben den Daten für den Druck optional eine oder alle der weiteren Größen bestimmt: die Temperatur, die Teilenummer, die Teile-ID, die Sensor-ID, die Position im Werkzeug, die verschiedenen Zykluszeiten, den Batteriestatus und die Sendeleistung des Sensors und diese drahtlos an ein Gateway oder einen Datenhalter zu übermitteln.

4. Überwachungssensor (1) gemäß den Ansprüchen 1 bis 3, **dadurch gekennzeichnet, dass** der Überwachungssensor (1) dazu ausgebildet ist beim Empfangen eines bestimmten Signals oder Drucks die Druckentlastungsöffnung (4) von dem Betriebszustand in den Sicherheitszustand zu schalten.

5. Überwachungssensor (1) gemäß den Ansprüchen 1 bis 4, **dadurch gekennzeichnet, dass** das Verstellen der Druckentlastungsöffnung (4) durch das Sensorelement (3) mittels einer elektromagnetischen Spule, einem Mikro-Servomotor oder einer elektromechanischen Verstelleinheit ausgelöst wird.

6. Überwachungssensor (1) gemäß den Ansprüchen 1 bis 5, **dadurch gekennzeichnet, dass** der Sensor eine Batterie (7) oder einen mechanisch aufladbaren Energiespeicher umfasst, um die Energie zum Verstellen der Druckentlastungsöffnung (4) bereitzustellen.

7. Überwachungssensor (1) gemäß den Ansprüchen 1 bis 6, **dadurch gekennzeichnet, dass** die Druckentlastungsöffnung (4) als ein Ventil, insbesondere als ein 2/2-Wege Sicherheitsventil, ausgebildet ist.

8. Überwachungssensor (1) gemäß den Ansprüchen 1 bis 7, **dadurch gekennzeichnet, dass** ein Signal zum Fernauslösen des Sensorelements (3) mittels Funk oder Bluetooth übertragen wird.

9. Überwachungssensor (1) gemäß den Ansprüchen 1 bis 8, **dadurch gekennzeichnet, dass** das Sensorelement (3) ein Gehäuse (8) aus Kunststoff und eine Grundplatte (9) aus Aluminium aufweist.

10. Überwachungssensor (1) gemäß den Ansprüchen 1 bis 9, **dadurch gekennzeichnet, dass** der mechanische Aufbau des Sensorelements (3) entsprechend den Betriebsbedingungen schock- und vibrationsresistent ausgebildet ist.

11. Überwachungssensor (1) gemäß den Ansprüchen 1 bis 10, **dadurch gekennzeichnet, dass** das Sensorelement (3) einen Betriebstemperaturbereich von 0 °C bis 80 °C aufweist.

12. Überwachungssensor (1) gemäß den Ansprüchen 1 bis 11, **dadurch gekennzeichnet, dass** das Sensorelement (3) einen Temperatur-Messbereich von 0 °C bis 85 °C und einen Druck-Messbereich von 0 bar bis 500 bar aufweist.

13. Überwachungssensor (1) gemäß Anspruch 7, **dadurch gekennzeichnet, dass** das Ventil (4) in den Verbindungsabschnitt zwischen der Anschlussvorrichtung (5) und dem Sensorelement (3) integriert ist.

## Claims

1. A monitoring sensor (1) for measuring, receiving and transmitting a physical variable of a gas pressure spring (2), comprising a sensor element (3) and a pressure relief opening (4), **characterized in that** the pressure relief opening (4) can be switched from an operating state into a safety state by remotely triggering pthe sensor element (3) in order to evacuate the gas pressure spring (2), wherein the monitoring sensor (1) is formed with a connection device (5), which can be detached in accordance with the intended use, for connecting to a coupling (6) of the gas pressure spring (2).

2. The monitoring sensor (1) according to claim 1, **characterized in that** the sensor element (3) is formed for monitoring a pressure in the gas pressure spring (2).

3. The monitoring sensor (1) according to claim 1 or 2, **characterized in that**, in addition to data for the pressure, the sensor element (3) is formed to optionally determine one or all of the additional variables: the temperature, the part number, the part ID, the sensor ID, the position in the tool, the different cycle times, the battery status and the transmission power of the sensor, and to transmit them wirelessly to a gateway or a data holder.

4. The monitoring sensor (1) according to claims 1 to 3, **characterized in that**, with reception of a certain signal or pressure, the monitoring sensor (1) is formed to switch the pressure relief opening (4) from the operating state into the safety state.

5. The monitoring sensor (1) according to claims 1 to 4, **characterized in that** the adjustment of the pressure relief opening (4) by the sensor element (3) is triggered by means of an electromagnetic coil, a micro servo motor or an electromechanical adjustment unit.

6. The monitoring sensor (1) according to claims 1 to 5, **characterized in that** the sensor comprises a battery (7) or a mechanically chargeable energy storage, to provide the energy for adjusting the pressure relief opening (4).

7. The monitoring sensor (1) according to claims 1 to 6, **characterized in that** the pressure relief opening (4) is formed as a valve, in particular a 2/2-way safety valve.

8. The monitoring sensor (1) according to claims 1 to 7, **characterized in that** a signal for remote triggering of the sensor elements (3) is transmitted wirelessly or via Bluetooth.

9. The monitoring sensor (1) according to claims 1 to 8, **characterized in that** the sensor element (3) comprises a housing (8) made of plastic and a base plate (9) made of aluminum.

10. The monitoring sensor (1) according to claims 1 to 9, **characterized in that** the mechanical construction of the sensor element (3) is designed to be impact- and vibration-resistant in accordance with the operating conditions.

11. The monitoring sensor (1) according to claims 1 to 10, **characterized in that** the sensor element (3) has an operating temperature range from 0 °C to 80 °C.

12. The monitoring sensor (1) according to claims 1 to 11, **characterized in that** the sensor element (3) has a temperature measurement range from 0 °C to 85 °C and a pressure measurement range from 0 bar to 500 bar.

13. The monitoring sensor (1) according to claim 7, **characterized in that** the valve (4) is integrated in the connection section between the connection device (5) and the sensor element (3).

## Revendications

1. Capteur de surveillance (1) permettant de mesurer, de recevoir et de transmettre une grandeur physique d'un ressort à gaz (2), comprenant un élément de capteur(3) et un orifice d'évacuation de pression (4),
**caractérisé en ce que** l'orifice d'évacuation de pression (4) peut être commuté au moyen d'un déclenchement à distance de l'élément de capteur (3) d'un état de fonctionnement à un état de sécurité pour faire le vide dans le ressort à gaz (2), le capteur de surveillance (1) étant réalisé avec un dispositif de raccordement (5) amovible conformément à l'usage prévu et destiné à être raccordé à un couplage (6) du ressort à gaz (2).

2. Capteur de surveillance (1) selon la revendication 1, **caractérisé en ce que** l'élément de capteur (3) est réalisé pour surveiller une pression dans le ressort à gaz (2).

3. Capteur de surveillance (1) selon la revendication 1 ou 2, **caractérisé en ce que** l'élément de capteur (3) est réalisé pour déterminer en plus des données pour la pression en option une ou la totalité des autres grandeurs supplémentaires : la température, le numéro de la pièce, l'identité de la pièce, l'identité du capteur, la position dans l'outil, les différents temps de cycles, l'état de la batterie et la puissance d'émission du capteur, et pour les transmettre sans fil à une passerelle ou à un support de données.

4. Capteur de surveillance (1) selon les revendications 1 à 3, **caractérisé en ce que** le capteur de surveillance (1) est réalisé pour commuter l'orifice d'évacuation de pression (4) de l'état de fonctionnement à l'état de sécurité à la réception d'un signal ou d'une pression déterminé(e).

5. Capteur de surveillance (1) selon les revendications 1 à 4, **caractérisé en ce que** le réglage de l'orifice d'évacuation de pression (4) par l'élément de capteur (3) est déclenché au moyen d'une bobine électromagnétique, d'un microservomoteur ou d'une unité de réglage électromécanique.

6. Capteur de surveillance (1) selon les revendications 1 à 5, **caractérisé en ce que** le capteur comprend une batterie (7) ou un accumulateur d'énergie pouvant être rechargé mécaniquement afin de fournir l'énergie pour le réglage de l'orifice d'évacuation de pression (4).

7. Capteur de surveillance (1) selon les revendications 1 à 6, **caractérisé en ce que** l'orifice d'évacuation de pression (4) est réalisé sous forme de soupape, en particulier d'une soupape de sécurité à 2/2 voies,

8. Capteur de surveillance (1) selon les revendications 1 à 7, **caractérisé en ce qu'**un signal pour le déclenchement à distance de l'élément de capteur (3) est transmis par radio ou par Bluetooth.

9. Capteur de surveillance (1) selon les revendications 1 à 8, **caractérisé en ce que** l'élément de capteur (3) présente un boîtier (8) en matière plastique et une plaque de base (9) en aluminium.

10. Capteur de surveillance (1) selon les revendications 1 à 9, **caractérisé en ce que** la structure mécanique de l'élément de capteur (3) est réalisée de manière résistante aux chocs et aux vibrations selon les conditions de fonctionnement.

11. Capteur de surveillance (1) selon les revendications 1 à 10, **caractérisé en ce que** l'élément de capteur (3) présente une plage de température de fonctionnement de 0 °C à 80 °C.

12. Capteur de surveillance (1) selon les revendications 1 à 11, **caractérisé en ce que** l'élément de capteur (3) présente une plage de mesure de température de 0 °C à 85 °C et une plage de mesure de pression de 0 bar à 500 bar.

13. Capteur de surveillance (1) selon la revendication 7, **caractérisé en ce que** la soupape (4) est intégrée dans la partie de liaison entre le dispositif de raccordement (5) et l'élément de capteur (3).
